# EUROPEAN PATENT SPECIFICATION

(11) **EP 1 778 779 B1**
(45) Date of publication and mention of the grant of the patent: **31.12.2008**
(21) Application number: 05774779.2
(22) Date of filing: 16.08.2005
(51) Int. Cl.: C08L 23/10

(54) **STRETCH BLOW-MOLDED CONTAINERS FROM METALLOCENE PROPYLENE POLYMER COMPOSITIONS**
STRECKBLASGEFORMTE BEHÄLTER AUS METALLOCEN-PROPYLENPOLYMER-ZUSAMMENSETZUNGEN
CONTENANTS MOULES PAR SOUFFLAGE BI-ORIENTE CONSTITUES DE COMPOSITIONS POLYMERES DE PROPYLENE DE METALLOCENE

(30) Priority: 18.08.2004 US 602554 P
(43) Date of publication of application: 02.05.2007
(73) Proprietor: Basell Poliolefine Italia S.r.l., 20124 Milano (IT)
(72) Inventor: MCKEEMAN, David H., Kennett Square, PA 19348 (US); BRASEL, Timothy C., Newark, DE 19711 (US); ROBESON, Leroy V., Hockessin, DE 19707 (US); WOERZ, Alexander, 67267 Gruenstadt (DE); SARTORI, Gabriella, I-44100 Ferrara (IT)
(74) Representative: Gaverini, Gaetano Luigi Attilio
(86) International application number: PCT/IB2005/052703
(87) International publication number: WO 2006/018812

(56) References cited:
- WO-A-99/41293
- US-A- 5 998 039

## Description

This invention relates to stretch blow molded containers from propylene polymer compositions produced with metallocene catalyst systems.

Stretch blow molding processes, such as injection stretch blow molding, are widely used for producing containers that meet commercial transparency requirements. Polyethylene Terephthalate ("PET") has often been used in injection stretch blow molding processes because of its desirable transparency characteristics. However, PET is relatively expensive, and is not typically suitable for those applications where the containers must be retorted, or for hot-fill applications, which may be required for applications involving consumable materials.

Polypropylene based containers are more cost effective than PET based material, and can be retorted in food and liquid applications. WO 99/41293 describes a process for producing injection stretch blow molded containers from propylene polymers using metallocene catalysts. U.S. Patent No. 4,357,288 teaches a process in which a parison is initially injection molded from a crystalline polypropylene at a temperature which is only slightly higher than the lowest temperature at which a clear melt is obtained, and the parison is then cooled until it hardens. The parison is then heated again to a temperature just below the amorphous flow temperature and stretch blow molded. EP-A 151 741 describes containers produced from propylene polymers with a comonomer content of from 1 to 6% by weight and a melt flow rate of from 4 to 50 g/10 min. EP-A 309 138 relates to a process for producing containers from propylene-ethylene copolymers with an ethylene content of from 0.5 to 8% by weight and having a melt flow rate of greater than 50 g/min. However, a need still exists for stretch blow molded containers having improved processability characteristics as well as an improved balance of haze and mechanical properties. It has unexpectedly been found that the stretch blow molded containers produced from the propylene polymer compositions described in this specification provide the required properties.

In one embodiment, the present invention relates to stretch blow molded containers comprising a propylene polymer composition produced with a metallocene catalyst, the propylene polymer composition comprising:
A. 25.0 wt % to 75.0 wt% of a homopolymer having an isotactic index greater than about 80%, preferably about 90% to about 99.5%; and
B. 25.0 wt% to 75.0 wt% of a random copolymer of propylene and ethylene containing about 0.3 to about 30 wt% of ethylene preferably about 0.3 to about 20 wt%, and having an isotactic index greater than about 60%, preferably greater than about 70%;
wherein the propylene polymer composition has a melt flow rate of 1 to 50 and a molecular weight distribution less than 3.5.

In another embodiment, the present invention relates to a process for producing stretch blow molded containers, the process comprising:
I. molding a propylene polymer composition produced with a metallocene catalyst, preferably at a temperature of about 200°C to about 280°C, the propylene polymer composition comprising:
   A. 25.0 wt % to about 75.0 wt% of a homopolymer having an isotactic index greater than about 80%, preferably about 90% to about 99.5%; and
   B. 25.0 wt% to 75.0 wt% of a random copolymer of propylene and ethylene containing about 0.3 to about 30 wt% of ethylene preferably about 0.3 to about 20 wt%, and having an isotactic index greater than about 60%, preferably greater than about 70%;
   wherein the propylene polymer composition has a melt flow rate of 1 to 50 and a molecular weight distribution less than 3.5, thereby forming a preform; and
II. stretch blow molding the perform, preferably at a temperature of about 100°C to about 160°C.

The propylene polymers produced with a metallocene catalyst used in the stretch blow molded containers comprise:
A. 25.0 wt % to 75.0 wt%, preferably 25.0 wt% to 65.0 wt%, more preferably 45.0 to 63.0 wt% of a homopolymer having an isotactic index greater than about 80%, preferably about 90% to about 99.5%; and
B 25.0 wt% to 75.0 wt%, preferably 35.0 wt% to 75.0 wt%, more preferably 37.0 wt% to 55.0 wt% of a random copolymer of propylene and ethylene, containing about 0.3 to about 30 wt% of ethilene, preferably about 0.3 to about 20 wt%, and having an isotactic index greater than about 60%, preferably greater than about 70%;
wherein the propylene polymer composition has a melt flow rate of 1 to 50, preferably 1 to 25, more preferably 2 to 20 and a molecular weight distribution less than 3.5.

The stretch blow molded containers of the invention possess good processability characteristics, an improved balance of transparency and mechanical properties, and are suitable for hot-fill and retort applications. In particular, the compositions used to produce the containers provide a wider processing window due to a broader melting point distribution.

In the hot-fill process, materials such as syrup, teas and fruit juices are heated and then placed in the container. Typical hot-fill temperatures are from about 70°C to about 104°C. The containers are also suitable for retorting applications where the filled containers are heated to sterilize the contents, typically at temperatures above 100°C, preferably at temperatures from about 104°C to about 135 °C.

Preferably, the propylene polymer material used in the containers of the present invention are produced with conventional polymerization processes. For example, the polymer material can be prepared by polymerizing the monomers in one or more consecutive or parallel stages. The polymerization can be carried out in any known manner in bulk, in suspension, in the gas phase or in a supercritical medium. It can be carried out batchwise or preferably continuously. Solution processes, suspension processes, stirred gas-phase processes or gas-phase fluidized-bed processes are possible. As solvents or suspension media, it is possible to use inert hydrocarbons, for example isobutane, or the monomers themselves. It is also possible to carry out the polymerization in two or more reactors.

Preferably, the polymerization of the propylene homopolymer A in a first step, as well as the propylene copolymer B in a second step, is carried out either in bulk, i.e. in liquid propylene as suspension medium, or else from the gas phase. If all polymerizations take place from the gas phase, the polymerization steps are preferably carried out in a cascade comprising stirred gas-phase reactors which are connected in series and in which the pulverulent reaction bed is kept in motion by means of a vertical stirrer. The reaction bed generally consists of the polymer which is polymerized in the respective reactor. If the initial polymerization of the propylene homopolymer A is carried out in bulk, preference is given to using a cascade made up of one or more loop reactors and one or more gas-phase fluidized-bed reactors. The preparation can also be carried out in a multizone reactor.

The propylene polymers of the invention can also be produced by a gas-phase polymerization process carried out in at least two interconnected polymerization zones. Said polymerization process is described in the European patent EP 782,587 and in the International patent application WO 00/02929. The process is carried out in a first and in a second interconnected polymerization zone to which propylene and ethylene or propylene and alphaolefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone are established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C, preferably from 70°C to 90°C. The process can be carried out under operating pressure of between 0.5 and 10 MPa, preferably between 1.5 and 6 MPa. Preferably, the various catalyst components are fed to the first polymerization zone, at any point of said first polymerization zone. However, they can also be fed at any point of the second polymerization zone. In the polymerization process, means are provided which are capable of totally or partially preventing the gas and/or liquid mixture present in the riser from entering the downcomer and a gas and/or liquid mixture having a composition different from the gas mixture present in the riser is introduced into the downcomer. According to a preferred embodiment, the introduction into the downcomer, through one or more introduction lines, of said gas and/or liquid mixture having a composition different from the gas mixture present in the raiser is effective in preventing the latter mixture from entering the downcomer. The gas and/or liquid mixture of different composition to be fed to the downcomer can optionally be fed in partially or totally liquefied form. The molecular weight distribution of the growing polymers can be conveniently tailored by carrying out the polymerization process in a reactor diagrammatically represented in Figure 4 of the International Patent Application WO 00/02929 and by independently metering the comonomer(s) and customary molecular weight regulators, particularly hydrogen, in different proportion into at least one polymerization zone, preferably into the riser.

The propylene polymer materials used in the containers of the present invention are prepared in the presence of Single-Site (e.g. metallocene) catalysts. A single-site catalyst system is defined as comprising:
- at least a transition metal compound containing at least one n-metal bond; and
- at least a suitable co-catalyst.
Preferred co-catalysts are the alumoxanes or the compounds able to form an alkylmetallocene cation. A preferred class of metallocene compounds is that of formula (I): 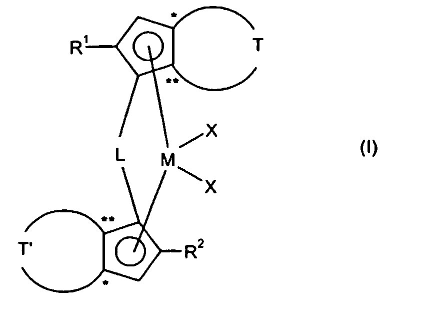 where
- M: is zirconium, hafnium or titanium,
- X: are identical or different and are each, independently of one another, hydrogen or halogen or a group -R, -OR, -OSO₂CF₃, -OCOR, -SR, -NR₂ or -PR₂, where R is linear or branched C₁-C₂₀-alkyl, C₃-C₂₀-cycloalkyl which may bear one or more C₁-C₁₀-alkyl radicals as substituents, C₆-C₂₀-aryl, C₇-C₂₀-alkylatyl or C₇-C₂₀-arylalkyl and may contain one or more heteroatoms from groups 13 - 17 of the Periodic Table of the Elements or one or more unsaturated bonds, with the two radicals X also being able to be joined to one another,
- L: is a divalent bridging group selected from the group consisting of C₁-C₂₀-alkylidene, C₃-C₂₀-cycloalkylidene, C₆-C₂₀-arylidene, C₇-C₂₀-alkylarylidene and C₇-C₂₀-arylalkylidene radicals which may contain heteroatoms from groups 13 - 17 of the Periodic Table of the Elements or is a silylidene group having up to 5 silicon atoms,
- R¹ and R²: are identical or different and are each, independently of one another, hydrogen or linear or branched C₁-C₂₀-alkyl or C₃-C₂₀-cycloalkyl which may bear one or more C₁-C₁₀-alkyl radicals as substituents, C₆-C₂₀-aryl, C₇-C₄₀-alkylaryl or C₇-C₄₀-arylalkyl and may contain one or more heteroatoms from groups 13 - 17 of the Periodic Table of the Elements or one or more unsaturated bonds,
- T and T': are divalent groups of the formulae (II), (III), (IV), (V), (VI) or (VII), 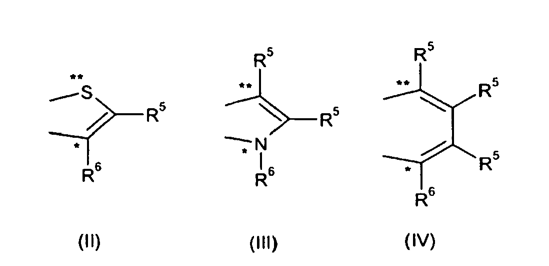 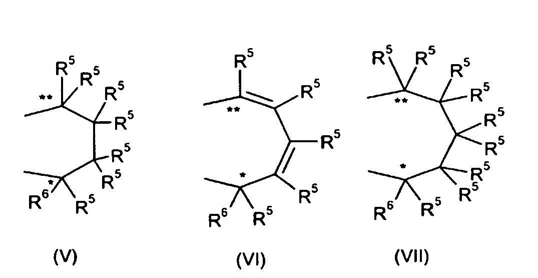 where
the atoms denoted by the symbols * and ** are in each case joined to the atoms of the compound of the formula (I) which are denoted by the same symbol, and
R⁵ and R⁶ are identical or different and are each, independently of one another, hydrogen or halogen or linear or branched C₁-C₂₀-alkyl or C₃-C₂₀-cycloalkyl which may bear one or more C₁-C₁₀-alkyl radicals as substituents, C₆-C₄₀-aryl, C₇-C₄₀-alkylaryl or C₇-C₄₀-arylalkyl and may contain one or more heteroatoms from groups 13 - 17 of the Periodic Table of the Elements or one or more unsaturated bonds or two radicals R⁵ or R⁵ and R⁶ are joined to one another to form a saturated or unsaturated C₃-C₂₀ ring,

Among the metallocene compounds of the formula (I), particular preference is given to those in which M is zirconium.

Furthermore, preference is given to metallocene compounds of the formula (I) in which the substituent R in the radicals X is C₁-C₁₀-alkyl such as methyl, ethyl, n-propyl, isopropyl, n-butyl, isobutyl, sec-butyl, tert-butyl, n-pentyl, n-hexyl, n-heptyl or n-octyl or C₃-C₂₀-cycloalkyl such as cyclopentyl or cyclohexyl. Preference is also given to metallocene compounds of the formula (I) in which the two radicals X are joined to one another so as to form a C₄-C₄₀-dienyl ligand, in particular a 1,3-dienyl ligand, or an -OR'O-, group in which the substituent R' is a divalent group selected from the group consisting of C₁-C₄₀-alkylidene, C₆-C₄₀-arylidene, C₇-C₄₀-alkylarylidene and C₇-C₄₀-alylalkylidene. X is particularly preferably a halogen atom or an -R or -OR group or the two radicals X form an -OR'O-group; X is very particularly preferably chlorine or methyl.

In preferred metallocene compounds of the formula (I), the divalent group L is a radical selected from the group consisting of the silylidenes -SiMe₂-, -SiPh₂-, -SiPhMe- and -SiMe(SiMe₃)- and the alkylidenes -CH₂-, -(CH₂)₂-, -(CH₂)₃- and -C(CH₃)₂-.

Preferred radicals R¹ and R² in the metallocene compounds of the formula (I) are linear or branched C₁-C₁₀-alkyl, in particular a linear C₁-C₄-alkyl group such as methyl, ethyl, n-propyl or n-butyl or a branched C₃- or C₄-alkyl group such as isopropyl or tert-butyl. In a particularly preferred embodiment, the radicals R¹ and R² are identical and are, in particular, both methyl, ethyl or isopropyl. In a further particularly preferred embodiment, R¹ is a linear or branched C₁-C₁₀-alkyl group which is unbranched in the a position, in particular a linear C₁-C₄-alkyl group such as methyl, ethyl, n-propyl or n-butyl, and R² is a C₃-C₁₀-alkyl group which is branched in the a position, in particular a branched C₃- or C₄-alkyl group such as isopropyl or tert-butyl.

In preferred metallocene compounds of the formula (I), the radicals R⁵ are each hydrogen or a linear or branched C₁-C₁₀-alkyl group, in particular a C₁-C₄-alkyl group such as methyl, ethyl, n-propyl, i-propyl or n-butyl, or a C₃-C₁₀-cycloalkyl group, in particular C₅-C₆-cycloalkyl such as cyclopentyl and cyclohexyl, C₆-C₁₈-aryl such as phenyl or naphthyl and C₇-C₂₄-alkylaryl, such as methylphenyl, ethylphenyl, n-propylphenyl, i-propylphenyl, t-butylphenyl, dimethylphenyl, diethylphenyl, diisopropylphenyl, ditertbutylphenyl, trimethylphenyl, methyl-t-butylphenyl, methylnaphthyl and dimethylnaphthyl or where two adjacent radicals R⁵ may be joined to form a 5-7-membered ring.

Furthermore, preference is given to metallocene compounds of the formula (I) in which R⁶ together with an adjacent radical R⁵ forms a cyclic system, in particular a unsaturated 6-membered ring, or R⁶ is an aryl group of the formula (XI), 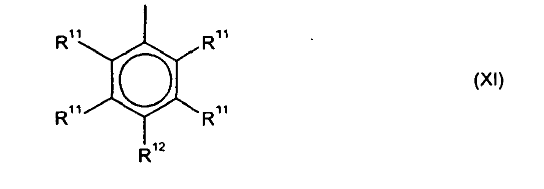 where
- R¹¹: are identical or different and are each, independently of one another, hydrogen or halogen or linear or branched C₁-C₂₀-alkyl, C₃-C₂₀-cycloalkyl which may bear one or more C₁-C₁₀-alkyl radicals as substituents, C₆-C₂₀-aryl, C₇-C₂₀-alkylaryl or C₇-C₂₀-arylalkyl and may contain one or more heteroatoms from groups 13 - 17 of the Periodic Table of the Elements or one or more unsaturated bonds, or two radicals R¹¹ may be joined to form a unsaturated C₃-C₂₀ ring,
with preference being given to R¹¹ being a hydrogen atom, and
- R¹²: is hydrogen or halogen or linear or branched C₁-C₂₀-alkyl, C₃-C₂₀-cycloalkyl which may bear one or more C₁-C₁₀-alkyl radicals as substituents, C₆-C₂₀-aryl, C₇-C₂₀-alkylaryl or C₇-C₂₀-arylalkyl and may contain one or more heteroatoms from groups 13 - 17 of the Periodic Table of the Elements or one or more unsaturated bonds, with preference being given to R¹² being a branched alkyl group of the formula-C(R¹³)₃, where
- R¹³: are identical or different and are each, independently of one another, a linear or branched C₁-C₆-alkyl group or two or three radicals R¹³ are joined to form one or more ring systems.

Preferably, at least one of the groups T and T' is substituted by a radical R⁶ of the formula (XI). Particular preference is given to both groups T and T' being substituted by such a radical. Very particular preference is then given to at least one of the groups T and T' being a group of the formula (IV) which is substituted by a radical R⁶ of the formula (XI) and the other having either the formula (II) or (IV) and likewise being substituted by a radical R⁶ of the formula (VII). In particular, such metallocene compounds have the formula (XII)

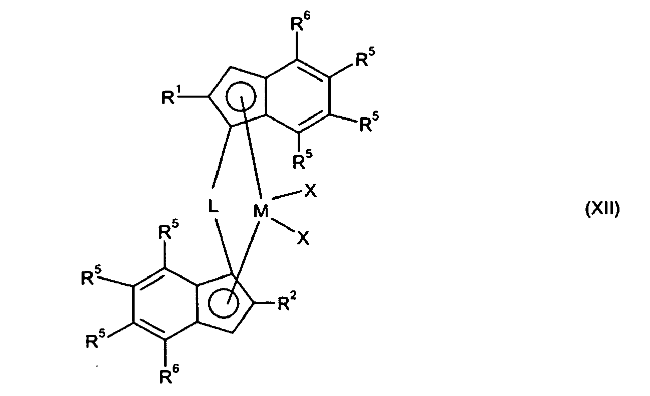

Particularly useful metallocene compounds and processes for preparing them are described, for example, in WO 01/48034 and WO 03/045964.

The metallocene compounds of the formula (I) are preferably used in the rac or pseudo-rac form; the term pseudo-rac form refers to complexes in which the two groups T and T' are in the rac arrangement relative to one another when all other substituents of the complex are disregarded.

It is also possible to use mixtures of various metallocene compounds.

Examples of particularly useful metallocene compounds of the formula (I) are
dimethylsilanediylbis(indenyl)zirconium dichloride,
dimethylsilanediylbis(tetrahydroindenyl)zirconium dichloride,
ethylenebis(indenyl)zirconium dichloride,
ethylenebis(tetrahydroindenyl)zirconium dichloride,
dimethylsilanediylbis(2-methylindenyl)zirconium dichloride,
dimethylsilanediylbis(2-isopropylindenyl)zirconium dichloride,
dimethylsilanediylbis(2-tert-butylindenyl)zirconium dichloride,
diethylsilanediylbis(2-methylindenyl)zirconium dibromide,
dimethylsilanediylbis(2-ethylindenyl)zirconium dichloride,
dimethylsilanediylbis(2-methyl-4,5-benzindenyl)zirconium dichloride
dimethylsilanediylbis(2-ethyl-4,5-benzindenyl)zirconiilm dichloride
methylphenylsilanediylbis(2-methyl-4,5-benzindenyl)zirconium dichloride,
methylphenylsilanediylbis(2-ethyl-4,5-benzindenyl)zirconium dichloride,
diphenylsilanediylbis(2-methyl-4,5-benzindenyl)zirconium dichloride,
diphenylsilanediylbis(2-ethyl-4,5-benzindenyl)zirconium dichloride,
diphenylsilanediylbis(2-methylindenyl)hafnium dichloride,
dimethylsilanediylbis(2-methyl-4-phenylindenyl)zirconium dichloride,
dimethylsilanediylbis(2-ethyl-4-phenylindenyl)zirconium dichloride,
dimethylsilanediylbis(2-methyl-4-(1-naphthyl)indenyl)zirconium dichloride,
dimethylsilanediylbis(2-ethyl-4-(1-naphthyl)-indenyl)zirconium dichloride,
dimethylsilanediylbis(2-propyl-4-(1-naphthyl)indenyl)zirconium dichloride,
dimethylsilanediylbis(2-i-butyl-4-(1-naphthyl)indenyl)zirconium dichloride,
dimethylsilanediylbis(2-propyl-4-(9-phenanthryl)indenyl)zirconium dichloride,
dimethylsilanediylbis(2-methyl-4-isopropylindenyl)zirconium dichloride,
dimethylsilanediylbis(2,7-dimethyl-4-isopropylindenyl)zirconium dichloride,
dimethylsilanediylbis(2-methyl-4,6-diisopropylindenyl)zirconium dichloride,
dimethylsilanediylbis(2-methyl-4-(p-trifluoromethylphenyl)indenyl)zirconium dichloride,
dimethylsilanediylbis(2-methyl-4-(3',5'-dimethylphenyl)indenyl)zirconium dichloride,
dimethylsilanediylbis(2-methyl-4-(4'-tert-butylphenyl)indenyl)zirconium dichloride,
diethylsilanediylbis(2-methyl-4-(4'-tert-butylphenyl)indenyl)zirconium dichloride,
dimethylsilanediylbis(2-ethyl-4-(4'-tert-butylphenyl)indenyl)zirconium dichloride,
dimethylsilanediylbis(2-propyl-4-(4'-tert-butylphenyl)indenyl)zirconium dichloride,
dimethylsilanediylbis(2-isopropyl-4-(4'-tert-butylphenyl)indenyl)zirconium dichloride,
dimethylsilanediylbis(2-n-butyl-4-(4'-tert-butylphenyl)indenyl)zirconium dichloride,
dimethylsilanediylbis(2-hexyl-4-(4'-tert-butylphenyl)indenyl)zirconium dichloride,
dimethylsilanediyl(2-isopropyl-4-phenylindenyl)(2-methyl-4-phenylindenyl)zirconium dichloride,
dimethylsilanediyl(2-isopropyl-4-(1-naphthyl)indenyl)(2-methyl-4-(1-naphthyl)indenyl)zirconium dichloride,
dimethylsilanediyl(2-isopropyl-4-(4'-tert-butylphenyl)indenyl)(2-methyl-4-(4'-tert-butylphenyl)indenyl)zirconium dichloride,
dimethylsilanediyl(2-isopropyl-4-(4'-tert-butylphenyl)indenyl)(2-ethyl-4-(4'-tert-butylphenyl)indenyl)zirconium dichloride,
dimethylsilanediyl(2-isopropyl-4-(4'-tert-butylphenyl)indenyl)(2-methyl-4-(3',5'-bis-tert-butylphenyl)indenyl)zirconium dichloride,
dimethylsilanediyl(2-isopropyl-4-(4'-tert-butylphenyl)indenyl)(2-methyl-4-(1'-naphthyl)indenyl)zirconium dichloride
ethylene(2-isopropyl-4-(4'-tert-butylphenyl)indenyl)(2-methyl-4-(4'-tert-butylphenyl)indenyl)zirconium dichloride
dimethylsilanedlyl(2-methyl-4-(4'-tert-butylphenyl)indenyl)2-isopropyl 4-(1-naphtyl)indenyl)zirconium dichloride,
dimethylsilanediyl(2-methyl-4-phenyl)-1-indenyl)(2-isopropyl-4-(4'-tert-butylphenyl)-1-indenyl)zirconium dichloride,
dimethylsilanediyl(2-isopropyl-4-(4'-tert-butylphenyl)indenyl)(2,6-dimethyl-4-(4'-tert-butylphenyl)indenyl)zirconium dichloride,
dimethylsilanediyl(2-isopropyl-4-(4'-tert-butylphenyl)indenyl)(2,7-dimethyl-4-(4'-tert-butylphenyl)indenyl)zirconium dichloride,
dimethylsilanediyl(2-isopropyl-4-(4'-tert-butylphenyl)indenyl)(2,5,6,7-tetramethyl-4-(4'-tert-butylphenyl)indenyl)zirconium dichloride,
dimethylsilanediyl(2-isopropyl-4-phenylindenyl)(6-methyl-4-phenyl-1,2,3,5-tetrahydro-s-indacen-7-yl)zirconium dichloride,
dimethylsilanediyl(2-isopropyl-4-phenylindenyl)(6-methyl-4-(4'-tert-butylphenyl)-1,2,3,5-tetrahydro-s-indacen-7-yl)zirconium dichloride,
dimethylsilanediyl(2-isopropyl-4-(4'-tert-butylphenyl)indenyl)(6-methyl-4-phenyl-1,2,3,5-tetrahydro-s-indacen-7-yl)zirconium dichloride,
dimethylsilanediyl(2-isopropyl-4-(4'-tert-butylphenyl)indenyl)(6-methyl-4-(4'-tert-butylphenyl)-1,2,3,5-tetrahydro-s-indacen-7-yl)zirconium dichloride,
dimethylsilanediyl(2-isopropyl-4-(4'-tert-butylphenyl)indenyl)(2-methyl-4,5-benzoindenyl)-zirconium dichloride,
dimethylsilanediyl(2-methyl-4-(4'-tert-butylphenyl)indenyl)(2-isopropyl-4-phenylindenyl)zirconium dichloride,
dimethylsilanediyl(2-ethyl-4-(4'-tert-butylphenyl)indenyl)(2-isopropyl-4-phenyl)indenyl)zirconium dichloride,
dimethylsilandiylbis-6-(3-methylcyclopentadienyl-[1,2-b]-thiophene) dimethyl;
dimethylsilandiylbis-6-(4-methylcyclopentadienyl-[1,2-b]-thiophene)zirconium dichloride;
dimethylsilandiylbis-6-(4-isopropylcyclopentadienyl-[1,2-b]-thiophene)zirconium dichloride;
dimethylsilandiylbis-6-(4-ter-butylcyclopentadienyl-[1,2-b]-thiophene)zirconium dichloride;
dimethylsilandiylbis-6-(3-isopropylcyclopentadienyl-[1,2-b]-thiophene)zirconium dichloride;
dimethylsilandiylbis-6-(3-phenylcyclopentadienyl-[1,2-b]-thiophene)zirconium dichloride;
dimethylsilandiylbis-6-(2,5-dimethyl-3-phenylcyclopentadienyl-[1,2-b]-thiophene)zirconium di-methyl;
dimethylsilandiylbis-6-[2,5-dimethyl-3-(2-methylphenyl)cyclopentadienyl-[1,2-b]-thiophene]zirconium dichloride;
dimethylsilandiylbis-6-[2,5-dimethyl-3-(2,4,6-trimethylphenyl)cyclopentadienyl-[1,2-b]-thiophene]zirconium dichloride;
dimethylsilandiylbis-6-[2,5-dimethyl-3-mesitylenecyclopentadienyl-[1,2-b]-thiophene]zirconium dichloride;
dimethylsilandiylbis-6-(2,4,5-trimethyl-3-phenylcyclopentadienyl-[1,2-b]-thiophene)zirconium dichloride;
dimethylsilandiylbis-6-(2,5-diethyl-3-phenylcyclopentadienyl-[1,2-b]-thiophene)zirconium dichloride;
dimethylsilandiylbis-6-(2,5-diisopropyl-3-phenylcyclopentadienyl-[1,2-b]-thiophene)zirconium dichloride;
dimethylsilandiylbis-6-(2,5-diter-butyl-3-phenylcyclopentadienyl-[1,2-b]-thiophene)zirconium dichloride;
dimethylsilandiylbis-6-(2,5-ditrimethylsilyl-3-phenylcyclopentadienyl-[1,2-b]-thiophene)zirconium dichloride;
dimethylsilandiylbis-6-(2-methyl-5-isopropyl-3-phenylcyclopentadienyl-[1,2-b]-thiophene)zirconium dichloride;
dimethylsilandiylbis-6-(2-methyl-5-isopropyl-3-(4'-tert.-butylphenyl)cyclopentadienyl-[1,2-b]-thiophene)zirconium dichloride;
dimethylsilandiyl-6-(2-methyl-5-isopropyl-3-phenylcyclopentadienyl-[1,2-b]-thiophene)-6-(2,5-dimethyl-3-phenylcyclopentadienyl-[1,2-b]-thiophene)zirconium dichloride;
dimethylsilandiyl-6-(2-methyl-5-isopropyl-3-(4'-tert.-butylphenyl)cyclopentadienyl-[1,2-b]-thiophene)-6-(2,5-dimethyl-3-(4'-tert.-butylphenyl)cyclopentadienyl-[1,2-b]-thiophene)zirconium dichloride;
dimethylsilandiyl-6-(2-methyl-5-isopropyl-3-phenylcyclopentadienyl-[1,2-b]-thiophene)-6-(2,5-dimethyl-3-(4'-tert.-butylphenyl)cyclopentadienyl-[1,2-b]-thiophene)zirconium dichloride;
dimethylsilandiyl-6-(2-methyl-5-isopropyl-3-(4'-tert.-butylphenyl)cyclopentadienyl-[1,2-b]-thiophene)-6-(2,5-dimethyl-3-phenylcyclopentadienyl-[1,2-b]-thiophene)zirconium dichloride;
dimethylsilandiyl-6-(2,5-dimethyl-3-phenylcyclopentadienyl-[1,2-b]-thiophene)(2-methyl-4-phenylindenyl)zirconium dichloride;
dimethylsilandiyl-6-(2,5-dimethyl-3-phenylcyclopentadienyl-[1,2-b]-thiophene)(2-isopropyl-4-phenylindenyl)zirconium dichloride;
dimethylsilandiyl-6-(2,5-dimethyl-3-phenylcyclopentadienyl-[1,2-b]-thiophene)(2-isopropyl-4-(1-naphthyl)indenyl)zirconium dichloride;
dimethylsilandiyl-6-(2,5-dimethyl-3-phenylcyclopentadienyl-[1,2-b]-thiophene)(2-isopropyl-4-(4'-tert.-butylphenyl)indenyl)zirconium dichloride;
dimethylsilandiyl-6-(2,5-dimethyl-3-phenylcyclopentadienyl-[1,2-b]-thiophene)(2-isopropyl-4-(3',5'-dimethylphenyl)indenyl)zirconium dichloride;
dimethylsilandiyl-6-(2,5-dimethyl-3-phenylcyclopentadienyl-[1,2-b]-thiophene)(2-isopropyl-4-(2',5'-dimethylphenyl)indenyl)zirconium dichloride;
dimethylsilandiyl-6-(2-methyl-5-isopropyl-3-phenylcyclopentadienyl-[1,2-b]-thiophene)(2-methyl-4-phenylindenyl)zirconium dichloride;
dimethylsilandiyl-6-(2-methyl-5-isopropyl-3-phenylcyclopentadienyl-[1,2-b]-thiophene)(2-ethyl-4-phenylindenyl)zirconium dichloride;
dimethylsilandiyl-6-(2-methyl-5-isopropyl-3-(3',5'-dimethylphenyl)cyclopentadienyl-[1,2-b]-thiophene)(2-methyl-4-phenylindenyl)zirconium dichloride;
dimethylsilandiyl-6-(2-methyl-5-isopropyl-3-(2',5'-dimethylphenyl)cyclopentadienyl-[1,2-b]-thiophene)(2-methyl-4-phenylindenyl)zirconium dichloride;
dimethylsilandiyl-6-(2-methyl-5-isopropyl-3-(4'-tert.-butylphenyl)cyclopentadienyl-[1,2-b]-thiophene)(2-methyl-4-phenylindenyl)zirconium dichloride;
dimethylsilandiyl-6-(2-methyl-5-isopropyl-3-(3',5'-dimethylphenyl)cyclopentadienyl-[1,2-b]-thiophene)(2-methyl-4-(4'-methylphenyl)indenyl)zirconium dichloride;
or the corresponding dimethylzirconium, monochloromono(alkylaryloxy)zirconium and di(alkylaryloxy)zirconium compounds.

Conventional nucleation agents may be added to the propylene polymer compositions used to form the bottles of the invention. Examples of suitable nucleating agents are inorganic additives such as talc, silica or kaolin, salts of monocarboxylic or polycarboxylic acids, e.g. sodium benzoate or aluminum tert-butylbenzoate, dibenzylidenesorbitol or its C₁-C₈-alkyl-substituted derivatives such as methyldibenzylidenesorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate and sodium 2,2'-ethylidene-bis(4,6-di-t-butylphenyl) phosphate. The propylene polymer compositions can contain up to 5 wt% of nucleating agent. When present, the nucleating agent is preferably present in an amount from 0.1 to 1% by weight, more preferably from 0.15 to 0.25% by weight. Preferably the nucleating agent is dibenzylidenesorbitol or a dibenzylidenesorbitol derivative. More preferably, the nucleating agent is dimethyldibenzylidenesorbitol.

Other additives used in the propylene polymer compositions can include, but are not limited to phenolic antioxidants, phosphite-series additives, anti-static agents and calcium stearate. Tetrakis[methylene-3-(3',5'-di-t-4-hydroxyphenyl)propionate] methane and n-octadecinyl-3-(4'-hydroxynyl) propionate are particularly preferred as the phenolic antioxidants. When present, the content of the phenolic antioxidant can range from about 0.001 to about 2 parts by weight, preferably from about 0.002 to about 1.8 parts by weight, more preferably from about 0.005 to about 1.5 parts by weight. Tris(2,4-di-t-butylphenyl) phosphite is preferred as the phosphite additive. When present, the content of the phosphite can range from about 0.001 to about 1.5 parts by weight, preferably from about 0.005 to about 1.5 parts by weight, more preferably from about 0.01 to about 1.0 parts by weight. When present, the content of calcium stearate can range from about 0.01 to about 2 parts by weight, preferably from about 0.02 to about 1.5 parts by weight, more preferably from about 0.03 to about 1.5 parts by weight.

The containers of the invention are produced by a process preferably including a first step of molding the propylene polymer compositions, preferably at a temperature from about 200°C to about 280°C to form a preform. The temperature would be selected by those skilled in the art depending on the particular polymer composition involved. The first molding step can include injection molding, compression molding or blow molding. Injection molding is preferred. The second step of the process of the invention includes stretch blow molding the preform formed in the first step, preferably at a temperature from about 100°C to about 160°C. Again, the stretch blow molding temperature would be selected by those skilled in the art depending on the polymer composition being molded. Both steps in the process of the invention can be performed in the same machine, as in the so-called single stage process. Alternately, preforms may be produced in a first piece of equipment, and subsequently routed to a second piece of equipment for stretch blow molding, as in the so-called two-stage process. In such a case, the preforms can be allowed to cool fully.

When required prior to the stretch blow molding step, the preforms are preferably heated in a heating oven. Infrared heating units are typically used, but one skilled in the art would recognize that any heat source consistent with the materials properties of the polymer based bottles may be used. When the preforms are heated prior to the stretch blow molding step in the two-stage process, the preforms are typically conveyed along a bank of heating units while being rotated to evenly distribute the heat. The bottles may also be contacted with cooling air during and after heating to minimize overheating of the preform surface. Once the heated preforms exit the heating oven, the preforms are transferred to a blow mold. A stretch rod is inserted into the preform to stretch the preform in the axial direction. Pressurized air at about 10 to about 30 atm, preferably about 18 to about 22 atm is introduced to complete the blow molding of the finished bottle. Optionally, the pressurized air can be introduced in two steps, where a pre-blow is performed by introducing pressurized air at about 4 to about 12 atm, followed by the final blow molding at the higher pressures described above.

Unless otherwise specified, the properties of the olefin polymer materials, and compositions that are set forth in the following examples have been determined according to the test methods set forth in Table I below.

| **Table I** | |
|---|---|
| Melt Flow Rate ("MFR") | ASTM D1238, (230° C; 2.16 kg), units of dg/min |
| Isotactic Index, ("I.I.") | Defined as the percent of olefin polymer insoluble in xylene. The weight percent of olefin polymer soluble in xylene at room temperature is determined by adding 2.5 g of polymer in 250 ml of xylene at room temperature in a vessel equipped with a stirrer, and heating at 135°C with agitation for 20 minutes to dissolve the polymer. The solution is cooled to 25°C while continuing the agitation, and then left to stand without agitation for 30 minutes so that the solids can settle. The solids are filtered with filter paper, the remaining solution is evaporated by treating it with a nitrogen stream, and the solid residue is vacuum dried at 80°C until a constant weight is reached. These values correspond substantially to the isotactic index determined by extracting with boiling n-heptane, which by definition constitutes the isotactic index of polypropylene. |
| Bottle Top Load @ Yield | ASTM D2659 |
| Haze | ASTM D 1003 |
| Bottle Drop Impact | ASTM D2463 procedure B |
| Tensile Young Modulus | ASTM D637 |
| Molecular Weight Distribution ("Mw/Mn") | Mw and Mn were measured using gel permeation chromatography (GPC). The measurements were made using a Waters GPCV 2000 Alliance machine with a Waters styragel HMW 6E Toluene, 300mm length, mixed bed column. The measurement temperature was 150C. 1,2,4-trichlorobenzene was used as the solvent. A sample concentration of 70mg/72g (0.097 wt%) is suppled in an amount of 209.5 µL for the measurement. The values of Mw and Mn are derived using a calibration curve formed using a polystyrene standard. |

Unless otherwise specified, all references to parts, percentages and ratios in this specification refer to percentages by weight.

The following examples illustrate improved physical properties for the containers of the invention.

### Example 1

Example 1 was prepared by first prepolymerizing Avant M101, a metallocene catalyst commercially available from Basell USA Inc., with propylene, where the yield of pre-polymerized catalyst was about 40 g/g-catalyst. The pre-polymerized catalyst and propylene were then continuously fed into a first loop reactor. The homopolymer formed in the first loop reactor and ethylene were fed to a second reactor. The temperature of both loop reactors was 70°C. The polymer was discharged from the second reactor, separated from the unreacted monomer and dried. The resultant polymer contained 60 wt% of a propylene homopolymer having an I.I. of 99.5 wt% and an MFR of 9.0, and 40 wt% of a propylene random copolymer having an ethylene content of 3.0 wt% and I.I. of 99.5 wt%. The total composition has an MFR of 11 dg/min and a molecular weight distribution of 2.5.

### Comparative Example 2

Comparative Example 2 is a propylene random copolymer having an ethylene content of 3.4 wt%, an MFR of 11 dg/min, an I.I. of 93.7 wt%, and a molecular weight distribution of 5.0 produced using Avant ZN118, a Ziegler Natta catalyst; both polymer and catalyst being commercially available from Basell USA Inc.

Example 1 and Comparative Example 2 were compounded on a single screw extruder to form pellets with 500 ppm of calcium stearate, 500 ppm DHT-4A commercially available from Kyowa Chemical Ind. Co. Ltd., 1200 ppm Irganox B225, commercially available from Ciba Specialty Chemicals Corporation, and 800 ppm of GMS 52 commercially available from Clariant International Ltd. The resulting pellets were then injection molded into a preform at a set temperature of 235°C using a reciprocating screw injection molding machine. Two different preform and bottle molds, A and B, were used. The resultant preforms were then introduced into a single cavity stretch blow molding machine in a time frame of 2 to 4 days after they were injection molded. The preforms were placed on a moving belt and the preforms were rotated. The rotating preforms passed in front of infra-red lamps, and preform temperatures were measured at the oven exit. Upon exiting the heating/conditioning area, the preforms were transferred to a blowing station. A blowing nozzle was inserted into the preform, guiding the stretching rod, which stretched the perform in the axial direction. There was a pressure pre-blow of 10 atm. that pre-stretched the preform to allow the removal of the stretching rod. This was followed by high pressure blowing at 20 atm to get optimized distribution of the material thickness in the bottle wall. Bottles were produced at a fixed production rate of 600 bottles/hour. Oven settings were adjusted to produce bottles with optimal clarity for each resin type.

Table 2 summarizes the bottle properties of Example 1 and Comparative Example 2 using preform and bottle mold A.

| **Table 2** | | |
|---|---|---|
| | **Example 1** | **Comparative Example 2** |
| Average bottle weight (gms) | 24.4 | 24.3 |
| Average side wall thickness (cm) | 0.0481 | 0.0522 |
| Minimum side wall thickness (cm) | 0.0297 | 0.0333 |
| Maximum side wall thickness (cm) | 0.0668 | 0.0737 |
| Haze, % | 1.69 | 1.52 |
| Top Load @ Yield, N | 292 | 187 |
| Bottle Drop Impact @ 4°C, m | 2.74 | >3.05 |
| Tensile Young's Modulus, MPa | 1834 | 1682 |

The results of Table 2 demonstrate that the bottles of Example 1 possess improved top load and tensile Young's modulus relative to those of Comparative Example 2.

Table 3 summarizes the bottle properties of Example 1 and Comparative Example 2 using preform and bottle mold B.

| **Table 3** | | |
|---|---|---|
| | **Example 1** | **Comparative Example 2** |
| Bottle weight (gms) | 28.5 | 28.9 |
| Average side wall thickness (µm) | 736.1 | 699.8 |
| Minimum side wall thickness (µm) | 261.6 | 243.8 |
| Maximum side wall thickness (µm) | 1600.2 | 1724.7 |
| Haze, % | 3.19 | 3.43 |
| Top Load @ Yield, N | 121 | 135 |
| Tensile Young's Modulus, MPa | 1719 | 1584 |

The results of Table 3 demonstrate that the bottles of Example 1 possess improved haze and tensile Young's modulus relative relative to the bottles of Comparative Example 2.

The following examples illustrate processing advantages for containers of the invention.

### Comparative Example 3

Comparative Example 3 was prepared by homopolymerizing propylene in a gas-phase reactor with vertical agitation at 60°C, at a pressure of 24 bar and with an average residence time of 1.5 hour, in the presence of hydrogen as molar mass regulator, using Avant M101, a metallocene catalyst commercially available from Basell USA Inc. The propylene homopolymer formed had an I.I. of 99.5%, an MFR of 12 and a molecular weight distribution of 2.4.

### Example 4

Example 4 was prepared according to the procedure described in Example 1, using Avant M101, a metallocene catalyst commercially available from Basell USA Inc. The resultant polymer contained 60 wt% of a propylene homopolymer having an I.I. of 99.5 wt% and an MFR of 9.0, and 40 wt% of a propylene random copolymer having an ethylene content of 3.0 wt% and I.I. of 99.5 wt%. The total composition has an MFR of I dg/min and a molecular weight distribution of 2.5.

The propylene polymer of Comparative Example 3 was extruded into pellets on a Leistritz micro 27, commercially available from Leistritz Extruder Corporation with 500 ppm calcium stearate, 800 ppm Irgaphos 168, and 400 ppm Irganox 3114; both Irgaphos 168 and Irganox 3114 being commercially available from Ciba Specialty Chemicals Corporation. The propylene polymer of Example 4 was extruded into pellets on a Leistritz micro 27, commercially available from Leistritz Extruder Corporation, with 500 ppm of calcium stearate, 500 ppm DHT-4A, commercially available from Kyowa Chemical Ind. Co. Ltd., and 1200 ppm Irganox B225, commercially available from Ciba Specialty Chemicals Corporation, and 800 ppm of GMS 55 commercially available from Clariant International Ltd.

The resulting pellets were injection molded into a preform using a Netstal reciprocating screw injection molding machine, commercially available from Netstal Machinery, Inc, at a melt temperature of 225°C. The preforms were then introduced into a reheat stretch blow molding machine, in a time frame of two months after they were injection molded. The preforms were then conveyed past IR heaters, thereby heating them to a consistent forming temperature. The preform exit temperature target was around 120°C. To evaluate the processing behavior of the bottles, the processing runs were given an overall rating as to whether the preform melted in the heating line, whether a bottle formed in the stretch blow molding step, including the first and last preforms in a series which were subjected to a higher level of heat, whether the formed bottle demolded correctly, whether the bottles included cracks or holes, and whether the bottle wall had creases or otherwise had thin areas in the wall.

Table 4 summarizes the overall rating for the production runs of bottles for Control Example 4 and Example 5.

| **Table 4** | | |
|---|---|---|
| | **Comparative Example 3** | **Example 4** |
| Processability rating | + | +++ |

| | | |
|---|---|---|
| + good ++ very good +++ excellent | | |

The results of Table 4 demonstrate that the bottles using the composition of Example 4 exhibited better processing characteristics than those of Comparative Example 3.

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

## Claims

1. A stretch blow molded container comprising a propylene polymer composition produced with a metallocene catalyst, the propylene polymer composition comprising:
(i) 25.0 wt % to 75.0 wt% of a homopolymer having an isotactic index greater than about 80%; and
(ii) 25.0 wt% to 75.0 wt% of a random copolymer of propylene and ethylene, containing about 0.3 to about 30 wt% of ethylene, and having an isotactic index greater than about 60%;
wherein the propylene polymer composition has a melt flow rate of from 1 to 50 and a molecular weight distribution less than 3.5.

2. The container of claim 1 wherein the melt flow rate is 1 to 25.

3. The container of claim 2 wherein the melt flow rate is 2 to 20.

4. The container of claim 1 wherein component (i) is present in an amount from 25.0 to 65.0 wt% and component (ii) is present in an amount from 35.0 to 75.0 wt%.

5. The container of claim 4 wherein component (i) is present in an amount from 45.0 to 63.0 wt% and component (ii) is present in an amount from 37.0 to 55.0 wt%.

6. The container of claim 1 wherein the propylene polymer composition further comprises:
(iii) up to 5 wt% of a nucleating agent.

7. The container of claim 6 wherein the nucleating agent is chosen from dibenzylidenesorbitol or its C₁-C₈-alkyl-substituted derivatives.

8. The container of claim 7 wherein the nucleating agent is dimethydibenzylidenesorbitol.

9. A process for producing stretch blow molded containers comprising:
I. molding a propylene polymer composition produced with a metallocene catalyst, the propylene polymer composition comprising:
A. 25.0 wt % to about 75.0 wt% of a homopolymer, having an isotactic index greater than about 80%; and
B. about 25.0 wt% to about 75.0 wt% of a random copolymer of propylene and containing about 0.3 to about 30 wt% of said olefin, and having an isotactic index greater than about 60%;
wherein the propylene polymer composition has a melt flow rate of 1 to 50 and a molecular weight distribution less than 3.5, thereby forming a preform; and
II. stretch blow molding the perform.

10. The process of claim 9 wherein the molding step I is conducted at a temperature from about 200°C to about 280°.

11. The process of claim 9 wherein the stretch blow molding step II is conducted at a temperature from about 100°C to about 160°C.

## Patentansprüche

1. Streckblasgeformtes Behältnis, umfassend eine Propylenpolymer-Zusammensetzung, die mit einem Metallocen-Katalysator hergestellt ist, wobei die Propylenpolymer-Zusammensetzung Folgendes umfasst:
(i) 25,0 Gew.-% bis 75,0 Gew.-% eines Homopolymers, das einen isotaktischen Index von größer als 80 % aufweist; und
(ii) 25,0 Gew.-% bis 75,0 Gew.-% eines statistischen Copolymers von Propylen und Ethylen, das ca. 0,3 bis ca. 30 Gew.-% Ethylen enthält und einen isotaktischen Index von größer als ca. 60 % aufweist;
worin die Propylenpolymer-Zusammensetzung eine Schmelzflussrate von 1 bis 50 und eine Molekulargewichtsverteilung von weniger als 3,5 aufweist.

2. Behältnis nach Anspruch 1, worin die Schmelzflussrate bei 1 bis 25 liegt.

3. Behältnis nach Anspruch 2, worin die Schmelzflussrate bei 2 bis 20 liegt.

4. Behältnis nach Anspruch 1, worin Komponente (i) in einer Menge von 25,0 bis 65,0 Gew.-% anwesend ist und Komponente (ii) in einer Menge von 35,0 bis 75,0 Gew.-% anwesend ist.

5. Behältnis nach Anspruch 4, worin Komponente (i) in einer Menge von 45,0 bis 63,0 Gew.-% anwesend ist und Komponente (ii) in einer Menge von 37,0 bis 55,0 Gew.-% anwesend ist.

6. Behältnis nach Anspruch 1, worin die Propylenpolymer-Zusammensetzung ferner Folgendes umfasst:
(iii) bis zu 5 Gew.-% eines Keimbildners.

7. Behältnis nach Anspruch 6, worin der Keimbildner aus Dibenzylidensorbitol oder seinen C₁-C₈-Alkyl-substituierten Derivaten ausgewählt ist.

8. Behältnis nach Anspruch 7, worin der Keimbildner für Dimethyldibenzylidensorbitol steht.

9. Verfahren zum Herstellen streckblasgeformter Behältnisse, die Folgendes umfassen:
I. Formen einer mit einem Metallocen-Katalysator hergestellten Propylenpolymer-Zusammensetzung, wobei die Propylenpolymer-Zusammensetzung Folgendes umfasst:
A. 25,0 Gew.-% bis ca. 75,0 Gew.-% eines Homopolymers, das einen isotaktischen Index von größer als ca. 80 % aufweist; und
B. ca. 25,0 Gew.-% bis ca. 75,0 Gew.-% eines statistischen Copolymers von Propylen und Ethylen, das ca. 0,3 bis ca. 30 Gew.-% des Olefins enthält und einen isotaktischen Index von größer als ca. 60 % aufweist;
worin die Propylenpolymer-Zusammensetzung eine Schmelzflussrate von 1 bis 50 und eine Molekulargewichtsverteilung von weniger als 3,5 aufweist, wodurch ein Vorformling gebildet wird; und
II. Streckblasformen des Vorformlings.

10. Verfahren nach Anspruch 9, worin der Formschritt I bei einer Temperatur von 200 °C bis ca. 280 °C durchgeführt wird.

11. Verfahren nach Anspruch 9, worin der Streckblasformschritt II bei einer Temperatur von ca. 100 °C bis ca.160 °C durchgeführt wird.

## Revendications

1. Conteneur moulé par étirage-soufflage, comprenant une composition à base d'un polymère de propylène, produit avec un catalyseur de type métallocène, la composition à base de polymère de propylène étant constituée par :
(i) 25,0% en poids à 75,0% en poids d'un homopolymère présentant un indice isotactique supérieur à environ 80% ; et
(ii) 25,0% en poids à 75,0% en poids d'un copolymère statistique de propylène et d'éthylène contenant environ 0,3 à environ 3% en poids d'éthylène et présentant un indice isotactique supérieur à environ 60% ;
où la composition à base de polymère de propylène présente un indice de fusion de 1 à 50 et une distribution de poids moléculaire inférieure à 3,5.

2. Conteneur selon la revendication 1, dans lequel l'indice de fusion est de 1 à 25.

3. Conteneur selon la revendication 2, dans lequel l'indice de fusion est de 2 à 20.

4. Conteneur selon la revendication 1, dans lequel le composant (i) est présent en une quantité de 25,0 à 65,0% en poids et le composant (ii) est présent en une quantité de 35,0 à 75,0% en poids.

5. Conteneur selon la revendication 4, dans lequel le composant (i) est présent en une quantité de 45,0 à 63,0% en poids et le composant (ii) est présent en une quantité de 37,0 à 55,0% en poids.

6. Conteneur selon la revendication 1, dans lequel la composition à base de polymère de propylène comprend en outre :
(iii) jusqu'à 5% en poids d'un agent de nucléation.

7. Conteneur selon la revendication 6, dans lequel l'agent de nucléation est choisi parmi le dibenzylidènesorbitol ou ses dérivés substitués par C₁-C₈-alkyle.

8. Conteneur selon la revendication 7, dans lequel l'agent de nucléation est le diméthyldibenzylidènesorbitol.

9. Procédé pour produire des conteneurs moulés par étirage-soufflage, comprenant :
I. le moulage d'une composition à base d'un polymère de propylène, produit avec un catalyseur de type métallocène, la composition à base de polymère de propylène étant constituée par :
A. 25,0% en poids à environ 75,0% en poids d'un homopolymère présentant un indice isotactique supérieur à environ 80% ; et
B. environ 25,0% en poids à environ 75,0% en poids d'un copolymère statistique de propylène et d'éthylène contenant environ 0,3 à environ 30% en poids de ladite oléfine et présentant un indice isotactique supérieur à environ 60% ;
où la composition à base de polymère de propylène présente un indice de fusion de 1 à 50 et une distribution de poids moléculaire inférieure à 3,5, formant ainsi une préforme ; et
II. le moulage par étirage-soufflage de la préforme ;

10. Procédé selon la revendication 9, dans lequel l'étape de moulage I est réalisée à une température d'environ 200°C à environ 280°C.

11. Procédé selon la revendication 9, dans lequel l'étape de moulage par étirage-soufflage II est réalisée à une température d'environ 100°C à environ 160°C.
